# EUROPÄISCHE PATENTANMELDUNG

(11) **EP 1 289 273 A1**
(43) Veröffentlichungstag der Anmeldung: **05.03.2003**
(21) Anmeldenummer: 01120511.9
(22) Anmeldetag: 28.08.2001
(51) Int. Cl.: H04N 3/08

(54) **Scanning-Kamera**

(71) Anmelder: SIEMENS AKTIENGESELLSCHAFT, 80333 München (DE)
(72) Erfinder: Werner, Marco, 81475 München (DE)

(57) **Zusammenfassung**

Die Erfindung betrifft eine Scanning-Kamera (SC) mit einem zweidimensional beweglichen Mikrospiegel (SP) zur Abtastung eines Objektes (OB) und zur Abbildung auf einen punktförmigen opto-elektrischen Sensor (SE), der zur Umsetzung eines im Zeitmultiplex abgetasteten Bildes in elektrische Bilddaten ausgebildet ist.

## Beschreibung

Die Erfindung betrifft eine sogenannte Scanning-Kamera.

Die heute in elektronischen Kameras beziehungsweise Digitalkameras , Camcordern und Bildtelefonen eingesetzten opto-elektrischen Bildsensoren basieren auf Halbleiterchips mit einem Array von lichtempfindlichen Elementen, sogenannten Pixeln. Zur Abbildung eines Objektes auf diesen Sensor ist eine Linsenoptik vorgesehen, die im einfachsten Fall aus einer einzigen Linse besteht. Eine solche Optik ist mit Verzerrungen behaftet, sie benötigt eine Scharfstellung oder ist an einen fest vorgegebenen Entfernungsbereich gebunden, und sie ist in ihrer Auflösung beschränkt.

Die Hersteller der eingangs genannten Geräte streben eine Reduzierung von Gewicht, Aufbauvolumen und der Kosten an. Die Linsenbrennweite und der Abstand der Linse vom Bildsensor ist durch die Sensordiagonale und den Aufnahmewinkel der Kamera fest vorgegeben. Eine weitere Miniaturisierung durch eine Verkleinerung der Sensordiagonale und damit der Pixelgrösse erfordert eine deutlich höherwertige und damit auch teurere Optik.

Der Erfindung liegt die Aufgabe zugrunde eine kleinere und doch kostengünstige Kamera anzugeben.

Diese Aufgabe wird erfindungsgemäß durch die im Patentanspruch angegebene Merkmale gelöst.

Bei der erfindungsgemäßen Kamera wird keine Linse mehr benötigt und alle optischen Eigenschaften können deutlich verbessert werden.

Das Aufbauvolumen ist bei der erfindungsgemäßen Scanning-Kamera verglichen mit den herkömmlichen Kameras mit Optik und Sensor-Array drastisch reduziert.

Im Folgenden wird die Erfindung anhand eines in der Zeichnung dargestellten Ausführungsbeispieles beschrieben. Dabei zeigen:
Figur 1 eine Prinzipdarstellung der erfindungsgemäßen Scanning-Kamera, und
Figur 2 und 3 Ausführungsformen für einen dabei verwendeten Mikrospiegel.

Die erfindungsgemäße Scanning-Kamera (SC) benutzt ein neuartiges Bildaufnahmesystem. Im Prinzip scannt ein zweiachsig kippbarer beziehungsweise schwenkbarer Mikrospiegel die Umgebung beziehungsweise ein Objekt rasterweise ab und lenkt den Lichtstrahl auf ein beispielsweise einzelnes Lichtdetektorelement beziehungsweise opto-elektrischen Sensor.

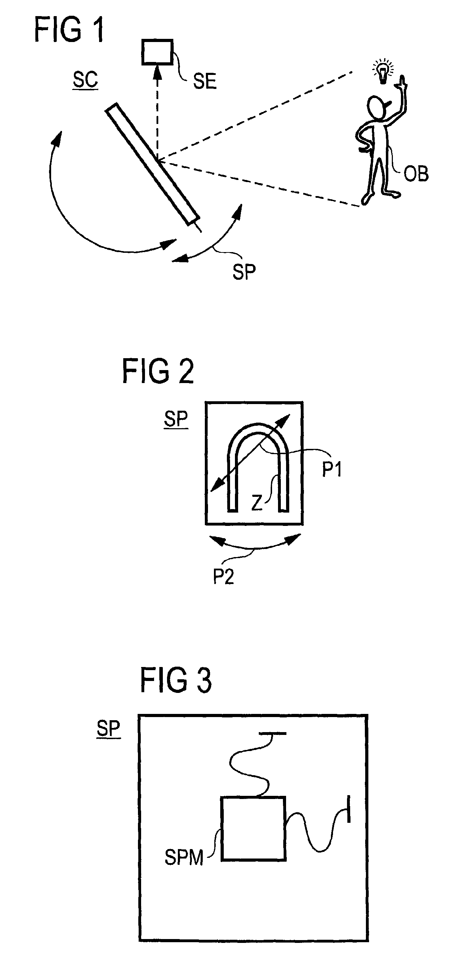

Wie in Figur 1 dargestellt, weist die erfindungsgemäße Scanning-Kamera SC einen punktförmigen Bildaufnahmesensor SE auf. Der Sensor SE besteht aus einem Element beziehungsweise einem Pixel. Insbesondere bei einer Farbkamera können mehrere Pixel vorgesehen sein, die für die verschiedenen Farben empfindlich sind. Der Bildaufnahmesensor SE kann beispielsweise durch einen Fototransistor, einen CCD-Chip oder durch einen CMOS-Baustein realisiert sein.

Weiter weist die Scanning-Kamera SC eine Ablenkeinheit auf, die durch einen Mikrospiegel SP realisiert ist. Erfindungsgemäß tastet der Mikrospiegel SP ein Objekt OB zweidimensional ab. Der Mikrospiegel SP ist dazu zweiachsig kippbar ausgebildet. Vorzugsweise stehen diese beiden Kippachsen senkrecht aufeinander Diese Kippbewegung ist in der Figur 1 durch die beiden Doppelpfeile (nicht näher bezeichnet) symbolisch dargestellt. Der abgetastete Raumwinkel wird auf den Sensor SE gelenkt beziehungsweise reflektiert. Hierdurch werden alle Elemente eines aufzunehmenden Bildes im Zeitmultiplexverfahren abgetastet und vom Sensor SE in Bilddaten umgesetzt.

Die Ablenkeinheit beziehungsweise der Mikrospiegel SP kann beispielsweise durch sogenannte mikromechanische Elemente (MEMS-Anordnungen) realisiert sein. Ein Überblick über solche Bauelemente kann beispielsweise im Internet unter der URL http://mems.colorado.edu/cl.res.ppt/ppt/oe.review abgefragt werden.

Bei der erfindungsgemäßen Scanning-Kamera SC reduziert sich der lichtempfindliche Sensor SE auf nur einen einzigen Bildpunkt, wobei alle Elemente eines aufzunehmenden Bildes beziehungsweise eines Objektes OB im Zeitmultiplex aufgenommen werden. Prinzipbedingt kann auf eine Kollimationsoptik verzichtet werden, womit auch das Fokussieren auf die Bildentfernung entfällt.

In Figur 2 ist eine mögliche Realisierungsform für den Mikrospiegel SP durch ein mikromechanisches Element dargestellt. Das mikromechanische Element besteht vorzugsweise aus Silizium, aus dem eine bewegliche Zunge Z herausgeätzt ist. Die Zunge Z kann senkrecht zur Zeichnungsebene ausgelenkt werden, beispielsweise mit einer Frequenz von ca. 30 bis 40 KHz. Diese Bewegungsrichtung ist durch einen Doppelpfeil P1 symbolisch dargestellt. Der in Figur 2 dargestellt Mikrospiegel SP kann weiter in der Zeichnungsebene gedreht werden, beispielsweise mit einer Frequenz von 50 Hz. Diese Bewegungsrichtung ist durch einen Doppelpfeil P2 symbolisch dargestellt.

In Figur 3 ist eine weitere Realisierungsmöglichkeit für den Mikrospiegel SP dargestellt. Ein Spiegelelement SPM ist derart an zwei Seiten beweglich mit einem Grundkörper aus Silizium verbunden, so dass dieses Element SPM zweidimensional ausgelenkt werden kann. Die Schwingungsfrequenzen sind beispielsweise die gleichen wie in Figur 2.

## Patentansprüche

1. Scanning-Kamera (SC)
mit einem zweidimensional beweglichen Mikrospiegel (SP) zur Abtastung eines Objektes (OB) und zur Abbildung auf einen punktförmigen opto-elektrischen Sensor (SE), der zur Umsetzung eines im Zeitmultiplex abgetasteten Bildes in elektrische Bilddaten ausgebildet ist.
